# EUROPEAN PATENT SPECIFICATION

(11) **EP 1 129 655 B1**
(45) Date of publication and mention of the grant of the patent: **12.05.2004**
(21) Application number: 01104823.8
(22) Date of filing: 27.02.2001
(51) Int. Cl.: A47J 41/00

(54) **An instant portable hot water making bottle**
Eine tragbare Heisswassererhitzungsflasche
Une bouilloire portable en forme de bouteille

(30) Priority: 29.02.2000 KR 2000010147
(43) Date of publication of application: 05.09.2001
(73) Proprietor: PNT Technology Inc., Seoul (KR); Kwon, Yun Sang, Seoul (KR)
(72) Inventor: Kwon, Yun Sang, Seoul (KR)
(74) Representative: Viering, Jentschura & Partner

(56) References cited:
- EP-A- 0 790 027
- DE-C- 338 680
- US-A- 3 804 076
- US-A- 4 675 508
- PATENT ABSTRACTS OF JAPAN vol. 1998, no. 12, 31 October 1998 (1998-10-31) & JP 10 179390 A (MATSUSHITA ELECTRIC IND CO LTD), 7 July 1998 (1998-07-07)
- PATENT ABSTRACTS OF JAPAN vol. 1998, no. 12, 31 October 1998 (1998-10-31) & JP 10 179391 A (MATSUSHITA ELECTRIC IND CO LTD), 7 July 1998 (1998-07-07)

## Description

The present invention relates to a hot water making bottle which makes liquid hot instantly. More specifically, the present invention relates to a portable hot water making bottle which makes liquid hot with heat that is transmitted from a heat source through a heat pipe which is a heat transmitting means. The heat transmitting means is installed inside the hot water making bottle and it works by a simple button operation. An instant portable vacuum insulated bottle according to the preamble of claim 1 is known from US-A-4 675 508.

Water is one of the most important source and material for human beings and human life. Water is essential for all activities in our lives such as traveling, sports, fishing, climbing and etc. In general, the temperature of water is similar to that of its surrounding environment and this is particularly true with drinking water. Therefore, natural mineral water is cold in winter and warm in summer. When we are in an environment where the temperature is below our normal body temperature, we feel the need of hot or warm water in order to maintain the temperature of our body and get over the cold feeling.

The most widely known and typical method of having hot water while we are outside or away from the stove is to carry equipment like burner and kettle of some kind to make hot water or to carry a vacuum insulated bottle filled with hot water. When we need hot water during our outdoor activities, it is troublesome as we have to carry necessary equipment for making hot water in addition to the particular equipment we need for certain types of outdoor activities. It is not only inconvenient carrying all those equipment just to get hot water but also it is troublesome obtaining hot water when you are in the area where using flammable goods or making fire is prohibited.

Another way we can have hot water during our outdoor activity is to carry a vacuum insulated bottle. However, the disadvantage of carrying the vacuum insulated bottle besides the inconvenience of carrying is that the amount of the hot water we can have is limited according to the size of the vacuum insulated bottle. Also, the temperature of water in the vacuum insulated bottle might be lowered as time goes on, so we may not have the hot water when we need it.

One object of the present invention is to provide a portable hot water making bottle which heats water instantly. This object is solved by the features in claim 1. Advantageous embodiments of the invention are described in the sub-claims. The hot water making bottle according to the invention is preferably provided with a portable heat source, in particular with a portable oil or gas burner device. A preferred gas burner device uses liquid standard gases such as liquid propane or butane gas.

In the following the invention is described on the basis of preferred embodiments with reference to the accompanying drawings.

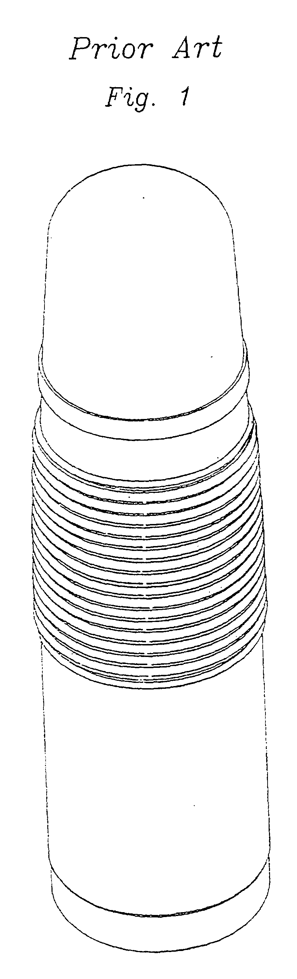

Fig. 1 shows a conventional portable vacuum insulated bottle which can contain hot water.

Fig. 2 is a cross-section view illustrating an example of a portable hot water making bottle according to the present invention.

Fig. 3 is a cross-sectional view illustrating another example of a portable hot water making bottle according to the present invention.

Fig. 4 shows few examples of structures of the heat pipe applied to hot water making bottles according to the present invention.

Fig. 5 is a cross-sectional view showing the structure of a portable hot water making bottle which is divided into a water containing means and a water heating means according to the present invention.

### Preferred Embodiment 1

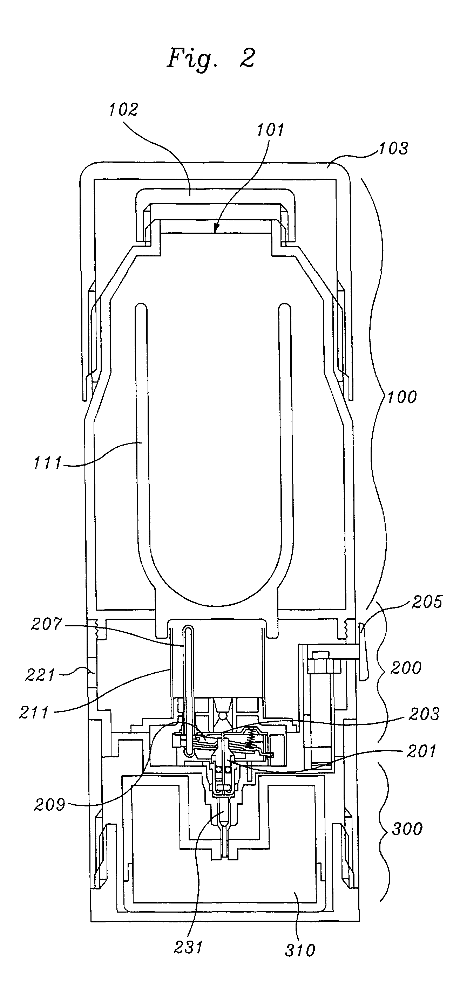

Fig. 2 is a cross-sectional view showing an example of a portable hot water making bottle. The portable hot water making bottle can have various sizes according to the amount of water to be contained. For example, the portable hot water making bottle can be a small size containing 250ml ∼ 500ml of water, a medium size containing 500ml ∼ 700ml of water and a large size containing 500ml ∼ 1500ml of water. It can also have various types such as cylindrical type like the conventional vacuum insulated bottle or a kettle type. The body of the portable hot water making bottle includes a water containing part 100, a heating part 200 which includes a heating means and a fuel containing part 300 in which fuel provided to the heating part 200 is contained.

The water containing part 100 has an opening portion 101 at its upper end portion, through which opening portion 101 water flows in and out. A cap 102 is included in the opening portion 101 in order to open and close the opening portion. The cap 102 is provided with an inner thread and is screwed on the upper end portion of the water containing part 100, which upper end portion is provided with a corresponding outside thread. The water containing part 100 is in a hollow cylindrical shape. A middle portion adjacent to the upper end portion of the water containing part 100 is provided with another outside thread, and a cup-shaped cover 103 provided with an inner thread is screwed onto said threaded middle portion, thereby covering the whole upper part of the water containing part 100 including the opening portion 101 and the cap 102. A U-shaped heat pipe 111 is installed at the water containing part 100. The heat pipe 111 is formed to contact the water contained in the water containing part 100 in maximum. One end portion of the heat pipe 111 is located in the water containing part 100 and the rest of the heat pipe is located in the heating part 200. The water containing part 100 comprises a bottom having a through hole through which the heat pipe extends towards the heating part 200. The heat pipe 111 is sealed against the inner wall of the through hole in order to prevent water from flowing from the water containing part 100 to the heating part 200. A heat source is installed in the heating part 200 and gas fuel such as liquid propane gas or butane gas is used as fuel for the heat source in this invention. An ignition portion 203 is installed at the end of a nozzle 201 and an ignition button 205 which operates the ignition portion 203 is installed at the outer surface of the body of the portable hot water making bottle. An ignition guide 211 forming an ignition space covers the nozzle 201 and the ignition portion 203. A Flame formed at the end of the nozzle 201 directly contacts the end portion of the heat pipe 111 located in the heating part 200, thereby directly heating the heat pipe 111 which itself transfers heat to the water contained in the water containing part 100 via thermal conduction. However, the ignition guide 211 and, thus, the ignition portion 203 may also be provided such that the flame only contacts the ignition guide 211 via which heat is then transferred to the heat pipe 111. In order to achieve a more effective heat transfer from the heat source to the heat pipe 111, the underside of the heat pipe 111 is formed with a recess into which the upper part of the ignition guide 211 is tightly fitted. The ignition guide 211 according to this embodiment is formed as hollow cylindrical body. The ignition guide 211 is preferably formed of metal and/or insulation material and is preferably in a mesh type. Further, the ignition guide 211 and, thus, the ignition space are insulated from a casing surrounding the heat source via an air gap so that the thermal energy from the heat source is substantially transferred to the heat pipe 111. The casing of heating part 200 has a cylindrical shape and is co-axially arranged with the cylindrical water containing part 100. The casing of the heating part 200 and the water containing part 100 are fixedly connected to each other at opposed axial ends.

One end of a fuel pipe 231 which provides fuel is connected to the nozzle 201 and the other end of the fuel pipe 231 is connected to the fuel containing part 300 which is located at the lower part of the heating part 200. A small fuel tank 310 is installed at the fuel containing part 300. When the small fuel tank 310 is mounted in the fuel containing part 300, one end of the fuel pipe 231 fits the outlet of the fuel tank 310. The fuel tank 310 can be changed into a new one after usage.

The temperature of water is adjusted by controlling the temperature of the heat pipe 111. Therefore, a thermal controller 207 such as bi-metal which contacts the heat pipe 111 and a fuel control lever 209 that is connected to the nozzle at the fuel pipe 231 is installed in the heating part 200. The thermal controller 207 controls the fuel control lever 209 to block the fuel pipe 231 in order to stop the fuel from flowing when the heat pipe 111 is heated up to a certain temperature. Then the heat source is turned off at the predetermined temperature. Furthermore, the oxygen needed for igniting fuel should be supplied sufficiently to the heating part 200.

On the other hand, the heat energy of the heating part 200 should not contact the body of the portable hot water making bottle as the heat might melt the material composing the portable hot water making bottle. Therefore, the thermal energy used in heating liquid should be exposed outwards and it is preferable to form air holes 221 around the body of the hot water making bottle. In this embodiment, there exists a sufficient gap between the ignition guide 211 and the casing of the heating part 200, so that the casing is prevented from being directly heated by the heat source, thereby avoiding loss of thermal energy.

### Preferred embodiment 2

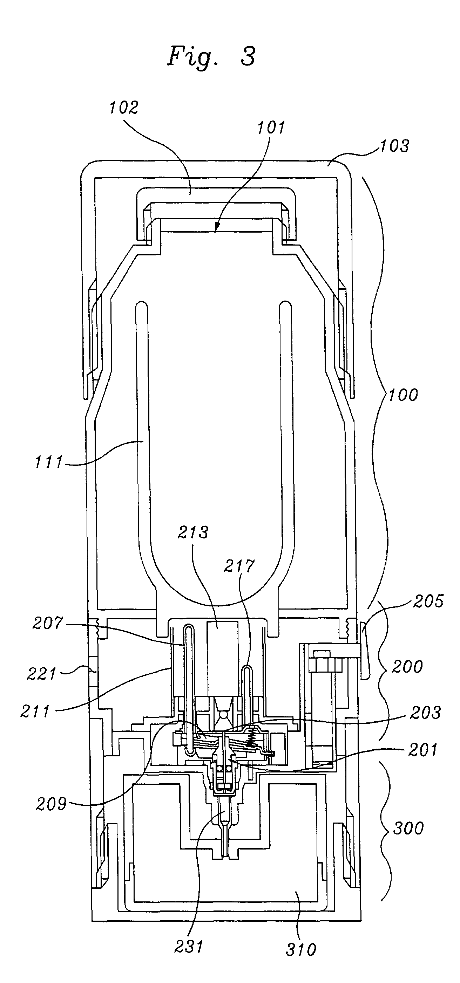

According to the preferred embodiment 1, the heat pipe 111 is directly heated up by the flame that is made from burning the gas fuel sprayed out from the nozzle 201 at the ignition portion 203. In such case, direct heat from the flame may over heat the nozzle 201 and the fuel pipe 231 which may cause explosion or fire. Therefore, the embodiment according to Fig. 3 suggests a portable hot water making bottle using a low temperature thermal catalyst or thermal catalyst as a heat source without making flame.

According to the embodiment of Fig. 3, a low temperature thermal catalyst 213 of a meshed cylindrical sheet type is placed between the nozzle 201 and heat pipe 111. When the ignition button 205 is switched on, spark is formed at the ignition part 203 and flame is made from burning the gas sprayed out from the nozzle 201. The low temperature thermal catalyst 213 is heated as the flame contacts the low temperature thermal catalyst directly. The nozzle 201 or the fuel pipe 231 is closed to eliminate the flame and the nozzle 201 or the fuel pipe 231 is re-opened without making any spark. The fuel is burnt on the surface of the thermal catalyst 213 without making any flame and a bi-metal 217 can be used for controlling flame. One end of the flame controlling bi-metal 217 is located on the nozzle 201 at which the flame is made when the spark is generated. The other end of the flame controlling bi-metal 217 is located on the fuel controlling lever 209. Once the flame is generated, the flame controlling bi-metal 217 is activated at the predetermined temperature. Then the flame controlling bi-metal 217 operates the fuel controlling lever 209 to block the fuel from being supplied and the flame is eliminated. When the flame controlling bi-metal 217 is cooled down, the fuel providing lever 209 is operated again and only the fuel is supplied to the thermal catalyst 213 again. Then, the fuel is burnt at the thermal catalyst 213 so that the thermal catalyst 213 becomes the heat source. Therefore, the thermal catalyst should fully contact the heat pipe 111 in order to transmit the thermal energy of the heat source(or thermal catalyst 213) to the heat pipe 111 effectively. With the exception of the above-mentioned features, the embodiment 2 is similar to the embodiment 1, so that a further description of the already described parts is omitted.

### Preferred Embodiment 3

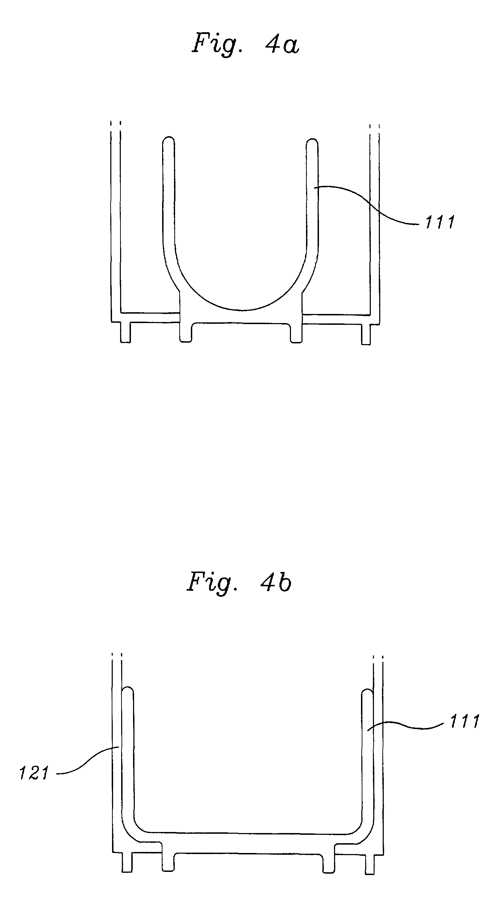

In the embodiment of Fig. 4a-4e, various shapes of the heat pipe 111 will be explained. The heat pipe 111 should transmit the thermal energy from the heat source to the water effectively. Therefore, the heat pipe 111 should be designed with a certain shape in which the area of the heat pipe in contact with the water is maximized. As shown in Fig. 4a, it is preferable that the heat pipe 111 is in a U-shape like a bowl or cup and the volume of the heat pipe 111 is smaller than the volume of the water containing part 100. In addition, the interior and the exterior side of the heat pipe 111 should be in contact with water to maximize the heating effect, i.e., the diameter of the bowl- or cup-shaped body of the heat pipe 111 should be smaller than the inner diameter of the water containing part 100. The heat pipe 111 according to Fig. 4a is provided in the embodiments according to Fig. 2 and 3. The heat pipe 111 according to Fig. 4a can be formed by adhering two metal plates with a gap therebetween having width of around 3mm.

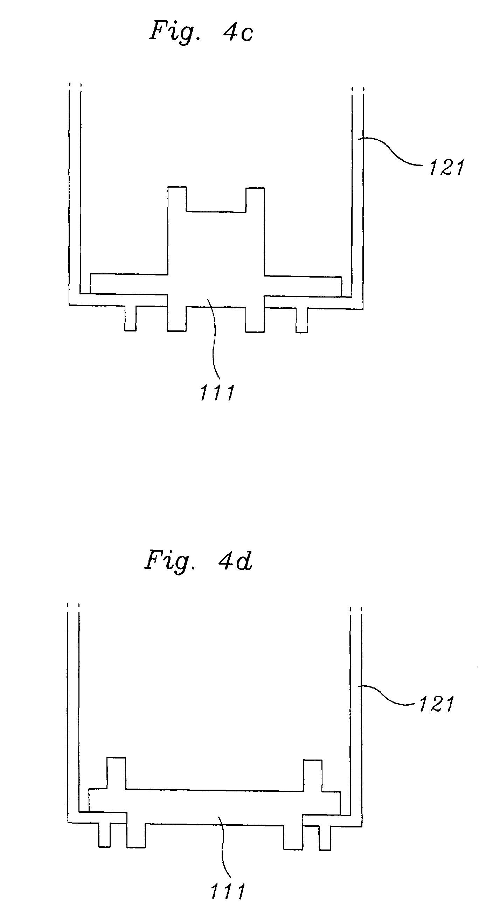

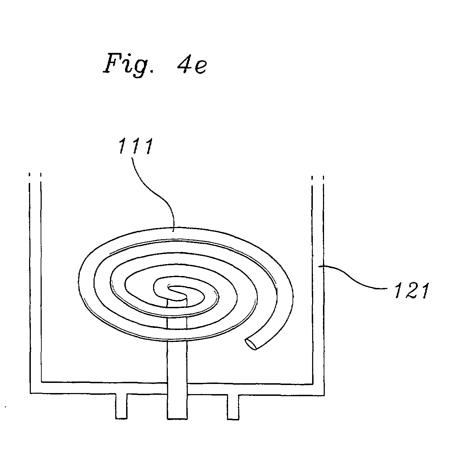

The heat pipe 111 can be made to have various shapes. It can be designed so that the inner surface of the water containing part 100 is in contact with water only as shown in Fig. 4b. In this case, the thermal energy can be transmitted to the hands of users directly so, it is preferable to cover the outer surface of the heat pipe 111 with a heat insulation material 121. The heat pipe 111 shown in Fig. 4c is in a cylindrical shape which is projected outwards in the center. The heat pipe in Fig. 4d is a in disk shape like a thin plate in which the edge part is projected. The heat pipe 111 of these two shapes can be used in situations like preparing milk for babies where water needs to be heated up to only about 30 to 40 centigrade. When applying the heat pipe 111 to products like nursing bottles, we can have water heated enough for our purpose in a short time even if the area of the heat pipe 111 in contact with water is not large. The heat pipe 111 in Fig. 4e is in a screw or coil shape, here, the heat pipe 111 is thin enough to be bent and is formed on the plane surface.

Preferably the inside of the heat pipe is in a vacuumed state which has low air pressure than the outside and is filled with a liquid type material for transmitting heat. When one end of the pipe is heated, the liquid material inside the pipe is heated and vaporizes. Eventually, the heat is transmitted to the other end of the pipe.

### Preferred Embodiment 4

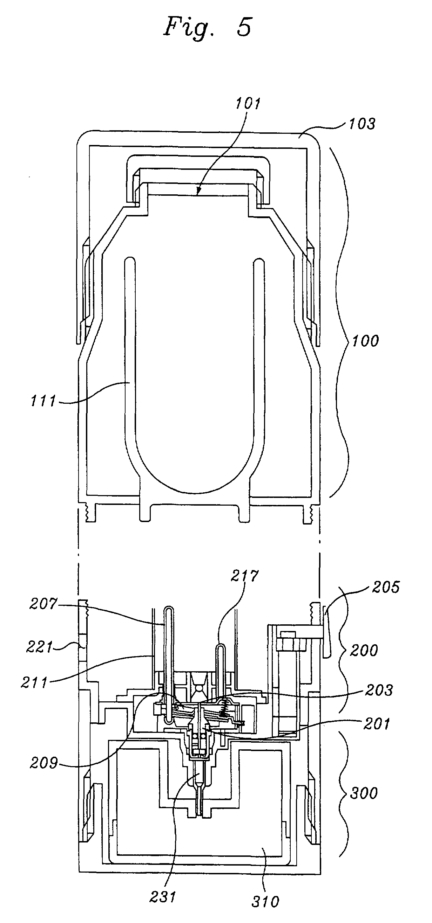

Previously, we considered a portable hot water making bottle in which the water containing part 100, the heating part 200 and the fuel containing part 300 are included in one body. For convenience purpose, as shown in Fig. 5, the water containing part 100 can be formed in one body and the heating part 200 and the fuel containing part 300 can be formed in another body so that the two bodies can be joint and separated easily. By making the heating part 200 and the fuel containing part 300 separable from the water containing part 100, there is an advantage that the replacement of the old part into a new part can be done easily. Another advantage is that it is safe and it can prevent unexpected circumstance from happening as the heating part and the water containing part are separable after the contained water has been heated. Furthermore, with one set of the heating part 200, it is possible to use multiple sets of the water containing part 100 so it is cost effective.

Until now, water is put into a vessel made of metal and heat source is provided to the bottom surface of the vessel to make water hot. When heating some kind of material, especially water, we need a vessel and heat source of some kind. According to the conventional concept and method, the object to be heated is held in a vessel and the heat source is a burner. The burner must have high thermal energy and the vessel is made with metal such as steel, stainless steel, copper, aluminum and the like as metal transmits heat in a short time. In order to achieve the maximum effect of making water hot, the heat source has to be large enough and the surface of a vessel should contact the heat source in maximum. Therefore, it was thought to be difficult to make compact sized heat source.

The principle of the present invention is to get over the traditional concept that the heat source has to be of a big volume to heat water. The main principle of the invention is based on the heating device which has a heating source and a vessel for the object to be heated. This invention proves that we can have hot water with minimum heat source that is portable and effective. In this invention, the volume of the heat source is minimized up to 1/1000(around 1∼2 cm³) of the volume of the vessel. The heat source is designed to make heat energy of high temperature and to have the minimum volume. In case of applying this minimum heat source to the conventional method of heating water, it takes long time to make large volume of water hot even if the temperature of the heat source is over about 1000_centigrade degree. This is due to the great loss of the heat source. The heat source in this invention is made by burning the gas which is used as the energy with a low temperature catalyst. More specifically, almost any type of energy such as solid, liquid, vapor or electric can be used to make heat source for this invention.

In this invention, the heat pipe is used to transmit the heat energy that is made from a small volume of heat source, such as from the ignition space, to the large volume of water in a short time. The heat pipe transmits the heat provided by the heat source to a heat receiving material, in this case, water, with the speed that is faster than or at least similar to that of the sound, so it is the most preferred heat transmitting means for actualizing the principle of the invention. In addition, the heat pipe is designed to transmit the heat energy most effectively as shown in the preferred embodiment 3.

The present invention suggests a portable hot water making bottle in which a small water vessel and a small heating device is included in one body. In order to maximize the heating effect, the present invention uses heat transmitting means like a hear pipe and boils water in a short time. Therefore, users can have hot water whenever and wherever they want.

## Claims

1. An instant portable vacuum insulated bottle comprising:
a water containing part (100) which has an opening (101) through which water can flow in and out and which has a bottom part;
a heating part (200) which is located at the bottom part of the water containing parts (100) and which includes a heat source (201, 203, 211, 213);
a heat transmitting means (111) installed in the water containing means (100) and the one end of it contacts to the heat source (201, 203, 211, 213), **characterized in that**
the heating part (200) is arranged with its heat source (201, 203, 211, 213) below the bottom part of the water containing part (100), that
the heat transmitting means (111) is a heat transmitting piece extending from the heating part (200) into the water containing part (100) through the bottom part thereof, and that
the heat source (201, 203, 211, 213) is a burner.

2. The instant portable vacuum insulated bottle according to claim 1, **characterized in that** the heating part (200) further comprises:
a fuel controlling means (209) which controls the supplying of the fuel to the heat source (201, 203, 211, 213),
a thermal controller (207) to operate the fuel controlling means (209) to stop fuel supply to the heat source (201, 203, 211, 213) when the heat transmitting means (111) reaches a predetermined temperature; and
an ignite means (203, 213) which burns the fuel supplied to the heat source.

3. The instant portable vacuum insulated bottle according to claim 2, **characterized in that**
the heat source (201, 203, 211, 213) has a low temperature thermal catalyst (213), and that
the heating part (200) further comprises a flame control bi-metal (217) to operate the fuel controlling means (209) to temporarily stop fuel supply to the heat source (201, 203, 211, 213) when the latter is heated up to a certain temperature, and to temporarily supply fuel again to the heat source (201, 203, 211, 213) after cooling down of the flame control bi-metal (217), wherein the temporarily supplied fuel is burnt at the thermal catalyst (213).

4. The instant portable vacuum insulated bottle according to one of claims 1 to 3, **characterized in that** the heat source (101, 203, 211, 213) includes a low temperature catalyst (213) of meshed type.

## Patentansprüche

1. Tragbare, unterdruckisolierte Flasche, aufweisend:
einen Wasser-enthaltenden-Teil (100), der eine Öffnung (101), durch die Wasser hinein und heraus fließen kann, und einen Bodenteil aufweist,
einen Erhitzungsteil (200), der an dem Bodenteil des Wasser-enthaltenden-Teils (100) angeordnet ist und der eine Wärmequelle (201, 203, 211, 213) aufweist,
ein Wärmeübertragungsmittel (111), das in das Wasserenthaltende-Teil (100) eingebaut ist und von dem ein Ende mit der Wärmequelle (201, 203, 211, 213) in Kontakt steht, **dadurch gekennzeichnet, dass**
der Erhitzungsteil (200) mit seiner Wärmequelle (201, 203, 211, 213) unterhalb des Bodenteils des Wasser-enthaltenden-Teils (100) angeordnet ist, dass
das Wärmeübertragungsmittel (111) ein Wärmeübertragungsteil ist, das sich von dem Erhitzungsteil (200) aus in den Wasser-enthaltenden-Teil (100) durch den Bodenteil desselben erstreckt, und dass
die Wärmequelle (201, 203, 211, 213) ein Brenner ist.

2. Tragbare, unterdruckisolierte Flasche gemäß Anspruch 1, **dadurch gekennzeichnet, dass** der Erhitzungsteil (200) ferner aufweist:
ein Treibstoff-Steuerungsmittel (209), welches das Zuführen von Treibstoff zur Wärmequelle (201, 203, 211, 213) steuert,
ein thermisches Steuerelement (207) zur Betätigung der Treibstoff-Steuerungsmittel (209), um die Treibstoffzufuhr zur Wärmequelle (201, 203, 211, 213) zu stoppen, wenn die Wärmeübertragungsmittel (111) eine vorbestimmte Temperatur erreichen,
und ein Zündungsmittel (203, 213), das den der Wärmequelle zugeführten Treibstoff verbrennt.

3. Tragbare, unterdruckisolierte Flasche gemäß Anspruch 2, **dadurch gekennzeichnet, dass**
die Wärmequelle (201, 203, 211, 213) einen Niedrigtemperatur-Wärmekatalysator (213) aufweist, und dass
der Erhitzungsteil (200) ferner ein Flamme-steuerndes Bimetall (217) aufweist, um die Treibstoff-Steuerungsmittel (209) zu betätigen und damit die Treibstoffzufuhr zur Wärmequelle (201, 203, 211, 213) temporär zu stoppen, wenn die Letztere auf eine bestimmte Temperatur aufgeheizt ist, und um temporär Treibstoff wieder der Wärmequelle (201, 203, 211, 213) zuzuführen, nachdem das Flamme-steuernde Bimetall (217) abgekühlt ist, wobei der temporär zugeführte Treibstoff an dem Wärmekatalysator (213) verbrannt wird.

4. Tragbare unterdruckisolierte Flasche gemäß einem der Ansprüche 1 bis 3, **dadurch gekennzeichnet, dass** die Wärmequelle (201, 203, 211, 213) einen Niedrigtemperatur-Katalysator (213) einer maschenartigen Bauform aufweist.

## Revendications

1. Bouilloire portable isolée en forme de bouteille, comprenant :
une partie contenant de l'eau (100) qui comporte une ouverture (101) au travers de laquelle l'eau peut s'écouler en entrant et en sortant, et qui comporte une partie de fond ;
une partie chauffante (200) qui est située au niveau de la partie du fond des parties contenant l'eau (100), et qui inclut une source de chaleur (201, 203, 211, 213) ;
des moyens de transmission de la chaleur (111) installés dans les moyens contenant l'eau (100) et dont une extrémité entre en contact avec la source de chaleur (201, 203, 211, 213), **caractérisée en ce que**
la partie chauffante (200) est agencée de telle sorte que sa source de chaleur (201, 203, 211, 213) se trouve en dessous de la partie du fond de la partie contenant l'eau (100), **en ce que**
les moyens de transmission de la chaleur (111) sont une pièce de transmission de la chaleur s'étendant de la partie chauffante (200) à la partie contenant l'eau (100) par l'intermédiaire de la partie de fond de celle- ci, et **en ce que**
la source de chaleur (201, 203, 211, 213) est un brûleur.

2. Bouilloire portable isolée en forme de bouteille selon la revendication 1, **caractérisée en ce que** la partie chauffante (200) comprend en outre :
des moyens de réglage du combustible (209), qui régulent l'alimentation en combustible de la source de chaleur (201, 203, 211, 213),
un dispositif de réglage thermique (207) destiné à actionner les moyens de réglage du combustible (209) pour arrêter l'alimentation en combustible de la source de chaleur (201, 203, 211, 213) quand les moyens de transmission de la chaleur (211) atteignent une température prédéterminée ; et des moyens d'allumage (203, 213) qui font brûler le combustible délivré à la source de chaleur.

3. Bouilloire portable isolée en forme de bouteille selon la revendication 2, **caractérisée en ce que**
la source de chaleur (201, 203, 211, 213) comporte un catalyseur thermique à basse température (213), et **en ce que**
la partie chauffante (200) comprend en outre un bilame de réglage de la flamme (217) destiné à actionner les moyens de réglage du combustible (209) pour arrêter temporairement l'alimentation en combustible de la source de chaleur (201, 203, 211, 213) quand cette dernière est chauffée à une certaine température, et pour délivrer temporairement de nouveau le combustible à la source de chaleur (201, 203, 211, 213) après le refroidissement du bilame de réglage de la flamme (217), dans laquelle le combustible délivré temporairement est brûlé au niveau du catalyseur thermique (213).

4. Bouilloire portable isolée en forme de bouteille selon l'une quelconque des revendications 1 à 3, **caractérisée en ce que** la source de chaleur (101, 203, 211, 213) inclut un catalyseur à basse température (213) du type à mailles.
